# EUROPÄISCHE PATENTSCHRIFT

(11) **EP 0 410 196 B1**
(45) Veröffentlichungstag und Bekanntmachung des Hinweises auf die Patenterteilung: **19.01.1994**
(21) Anmeldenummer: 90113071.6
(22) Anmeldetag: 09.07.1990
(51) Int. Cl.: F16F 9/36, F16F 9/02, F16F 9/44, A47C 3/30, A47B 9/10

(54) **Längeneinstellbare Verstelleinrichtung**
Length adjustable setting device
Dispositif de longueur ajustable

(30) Priorität: 26.07.1989 DE 8909051 U
(43) Veröffentlichungstag der Anmeldung: 30.01.1991
(73) Patentinhaber: SUSPA COMPART Aktiengesellschaft, D-90518 Altdorf (DE)
(72) Erfinder: Bauer, Hans Jürgen, D-8503 Altdorf (DE); Stadelmann, Ludwig, D-8503 Altdorf (DE); Wolf, Herbert, D-8500 Nürnberg (DE)
(74) Vertreter: Rau, Manfred, Dr. Dipl.-Ing.

(56) Entgegenhaltungen:
- DE-A- 2 638 363
- DE-A- 3 217 183
- DE-B- 1 750 482
- US-A- 4 784 375

## Beschreibung

Die Erfindung betrifft eine längeneinstellbare Verstelleinrichtung nach dem Oberbegriff des Anspruches 1.

Es gibt zwei grundsätzliche Gruppen derartiger Verstelleinrichtungen. Die eine Gruppe ist beispielsweise bekannt aus der EP-Al-0 234 184. Bei dieser Gruppe von Verstelleinrichtungen ist das Ventil im Kolben angeordnet. Bei der anderen Gruppe von Verstelleinrichtungen, wie sie beispielsweise aus der DE-C-18 12 282 (entsprechend US-PS 3 656 593) bekannt sind, ist das Ventil an dem Ende des Gehäuses angeordnet, das dem Austritt der Kolbenstange entgegengesetzt liegt. Beide Arten von Verstelleinrichtungen weisen zumindest eine Teil-Gasfüllung auf, mittels derer die Kolbenstange beim Öffnen des Ventils aus dem Gehäuse hinausgeschoben oder gegen deren Druckkraft die Kolbenstange hineingeschoben werden kann. Wenn der Kolben selber in einem Flüssigkeitsraum verschiebbar ist, dann ist eine vollständige, d.h. praktisch starre Blockierung dieser auch als Gasfeder zu bezeichnenden Verstelleinrichtung möglich. Wenn dagegen das gesamte Gehäuse mit Druckgas gefüllt ist, dann ist auch bei geschlossenem Ventil noch eine Federungsmöglichkeit mit einer sehr steilen Weg-Kraft-Kennlinie gegeben. Der Druck im Gehäuse der jeweiligen Verstelleinrichtung ist sehr hoch und beträgt in der Regel etwa 8o bar, kann aber auch sehr viel höher sein. Um die Verstelleinrichtungen auf lange Zeit funktionsfähig zu halten, müssen Dichtungen vorgesehen sein, die einen Austritt des Druckmediums nach außen auch auf lange Sicht wirksam verhindern. Diese Dichtungen müssen gleichzeitig hochverschleißfest sein, da - je nach Einsatz der Verstelleinrichtung - in großem Umfang Bewegungen zwischen der Dichtung und der Kolbenstange einerseits oder der Dichtung und dem Auslösestift andererseits auftreten. Als hochverschleißfestes Dichtungsmaterial hat sich beispielsweise Polyurethan sehr bewährt. Bei Einsatz solcher Verstelleinrichtungen in aggressiver Umgebung, d.h. bereits bei hoher Luftfeuchtigkeit, hat sich gezelgt, daß die ein Austreten von Druckmedium verhindernden Dichtungen in zu geringer Zeit zerstört werden, was einer Zerstörung der gesamten Verstelleinrichtung gleichkommt.

Aus der DE-A1-3 217 183 ist eine teleskopierbare Federungs- und/oder Dämpfungseinheit bekannt, die ein zylindrisches Gehäuse aufweist, aus dessen einem Ende eine Kolbenstange abgedichtet herausgeführt ist, die dort in einer gehäusefesten Führungsbüchse geführt ist. Die Kolbenstange liegt radial weitgehend spielfrei gegen die Führungsfläche der Führungsbüchse an. Um auch die in der Führung der Kolbenstange begründeten Dichtungsprobleme zu beseitigen, ist die Führungsfläche der Führungsbüchse ballig ausgebildet. Weiterhin besteht die Führungsbüchse aus hartem keramischem Werkstoff. Dadurch wird erreicht, daß im Gegensatz zur konventionellen zylindrischen Ausgestaltung geringfügige Verkantungsbewegungen der Kolbenstange relativ zum Gehäuse zugelassen werden, ohne daß hierdurch bedingte Kantenpressungen zwischen Führungsfläche und Kolbenstange auftreten können. Ein Verschleiß der Führungsbüchse und Oberflächenbeschädigungen der Kolbenstange werden also reduziert.

Der Erfindung liegt die Aufgabe zugrunde, die Verstelleinrichtungen der gattungsgemäßen Art so auszubilden, daß eine vorzeitige Zerstörung der ein Austreten von Druckmedium verhindernden Dichtungen vermieden wird.

Diese Aufgabe wird erfindungsgemäß durch die Merkmale im Kennzeichnungsteil des Anspruches 1 gelöst. Der am stärksten beanspruchte und gleichzeitig größte abzudichtende Bereich liegt am Kolbenstangenaustritt. Insofern ist es besonders wichtig, an dieser Stelle einen Eintritt von Gas und insbesondere Flüssigkeit von außen in die Gasfeder zu verhindern. Nach Anspruch 2 kann es zusätzlich vorteilhaft sein, eine entsprechende Abdichtung auch zur Innenwand des Gehäuses am Kolbenstangenaustritt vorzusehen.

Eine entsprechende Dichtung auch am Ventilkörper nach Anspruch 3 vorzusehen, ist ebenfalls bedeutsam, wenn auch nicht ganz so wichtig, wie am Kolbenstangenaustritt, da die abzudichtenden Flächen kleiner sind und da auch die Betätigung des Ventils bei weitem nicht so oft erfolgt, wie Relativbewegungen der Kolbenstange gegenüber dem Gehäuse auftreten.

In den weiteren Unteransprüchen sind vorteilhafte Werkstoffauswahlen und Dimensionierungen angesprochen, wobei durch die geringere Vorspannung der einen Eintritt von Gas und insbesondere Flüssigkeit in das Gehäuse verhindernden Dichtungen erreicht wird, daß deren Verschleiß durch Reibung auf ein Minimum reduziert wird, ohne daß ihre Funktion, ein Eintreten von Flüssigkeit und gegebenenfalls Gas aus der Atmosphäre zu verhindern, beeinträchtigt wird. Andererseits ist es durch diese Maßnahmen weiterhin möglich, die ein Austreten von Druckmedium verhindernden Dichtungen aus Materialien herzustellen, die gegenüber Wasser oder anderen aggressiven Medien nicht resistent sind.

Weitere Vorteile und Merkmale der Erfindung ergeben sich aus der nachfolgenden Beschreibung von zwei Ausführungsbeispielen anhand der Zeichnung. Es zeigt
Fig. 1 eine längeneinstellbare Verstelleinrichtung nach der Erfindung in einer Vertikalansicht, in teilweise aufgebrochener Darstellung,
Fig. 2 einen Teil-Längsschnitt aus Fig. 1 in stark vergrößertem Maßstab und
Fig. 3 einen Teil-Längsschnitt einer abgewandelten Ausführungsform in einer Fig. 2 entsprechenden Darstellung.

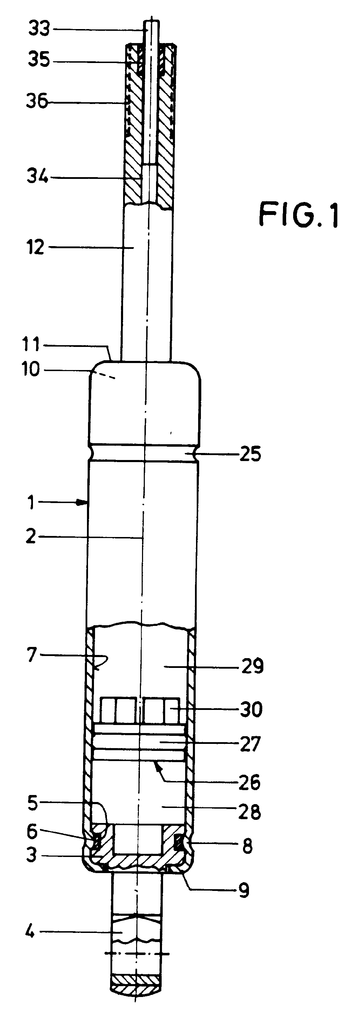

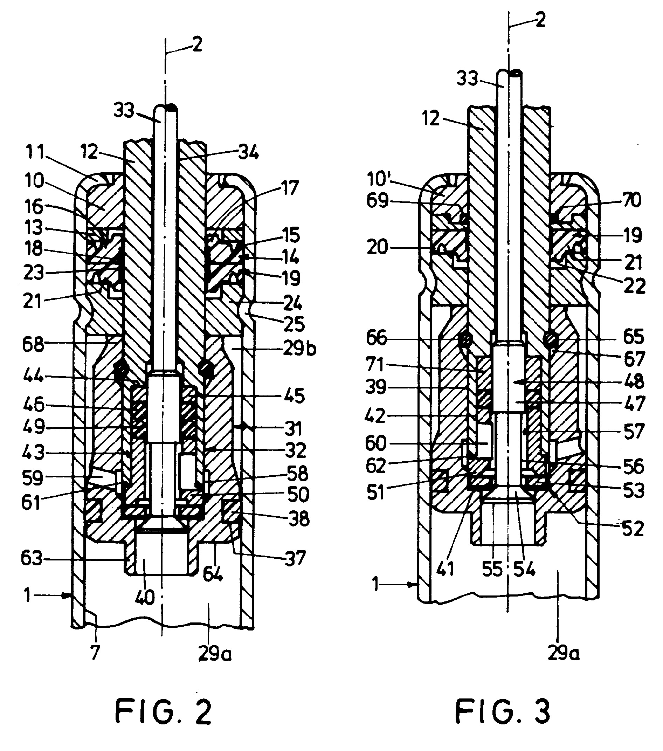

Fig. 1 zeigt eine als starr blockierbare Gasfeder ausgebildete Verstelleinrichtung, wobei die Fig. 2 und 3 jeweils gleichartige Teilausschnitte aus Fig. 1 darstellen. Die nachfolgende Beschreibung bezieht sich daher überwiegend auf alle drei Zeichnungen, wobei teilweise aus Gründen der Übersichtlichkeit die Bezugsziffern nicht in allen drei Zeichnungsfiguren angegeben sind, auch wenn das entsprechende Teil dort dargestellt ist. Sie weist ein zylindrisches, beispielsweise aus einem Stahlrohr gebildetes Gehäuse 1 mit einer Mittel-Längs-Achse 2 auf. An einem Ende ist das Gehäuse 1 mittels eines Verschlußstopfens 3 verschlossen, an dem als Befestigungseinrichtung 4 ein sogenanntes Auge angebracht ist. Der Verschlußstopfen 3 weist an seinem Umfang eine Nut 5 auf, in der eine ringförmige Dichtung 6 angeordnet ist, die gegen die Innenwand 7 des Gehäuses 1 dichtend anliegt. Der Verschlußstopfen 3 ist dadurch in Richtung der Achse 2 relativ zum Gehäuse 1 festgelegt, daß dieses eine gegen die Dichtung 6 und in die Nut 5 eingedrückte Sicke 8 aufweist. Außerdem ist das zugeordnete Ende des Gehäuses 1 mit einer den Verschlußstopfen 3 außen umgreifenden Umbördelung 9 versehen.

Am anderen Ende ist das Gehäuse 1 mit einer konzentrisch zur Achse 2 angeordneten Führungsbüchse 10 vorgesehen, die an ihrer Außenseite ebenfalls von einer Umbördelung 11 des Gehäuses übergriffen wird. In der Führungsbüchse 10 ist eine konzentrisch zur Achse 2 angeordnete, aus dem Gehäuse 1 herausgeführte Kolbenstange 12 in ihrer Längsrichtung verschiebbar geführt.

Gegen die Führungsbüchse 10 und die Innenwand 7 des Gehäuses 1 stützt sich ein Stützring 13 ab, dessen Innendurchmesser deutlich kleiner ist als der Außendurchmesser der Kolbenstange 12. Im Anschluß daran ist eine erste Dichtung 14 vorgesehen, die zur Abdichtung gegen ein Eindringen von Flüssigkeiten und gegebenenfalls Gasen von außen in das Gehäuse 1 hinein dient, wobei primär die Abdichtung gegen in mikroskopisch feinen Mengen eindringende Flüssigkeiten vorgesehen ist. Sie weist eine zum Ende des Gehäuses 1 hin gerichtete, an der Innenwand 7 anliegende Dichtlippe 15 auf, die also gegen ein Eindringen von Medien zwischen Führungsbüchse 10 und Innenwand 7 in das Gehäuse hinein abdichtet, obwohl auf diesem Wege in der Regel mit einem Eindringen von Medien nicht zu rechnen ist. Die Dichtung 14 stützt sich weiterhin mit einer Stützschulter 16 gegen den Stützring 13 ab, wodurch ihre axiale Lage relativ zur Führungsbüchse 10 festgelegt ist. Die Dichtlippe 15 kann also nicht axial zusammengedrückt werden; sie liegt frei vor dem Stützring 13. Die Dichtung 14 weist weiterhin einen an der Kolbenstange 12 anliegenden Dichtungssteg 17 auf, der ebenfalls gegen ein Eindringen von Medien zwischen Führungsbüchse 10 und Kolbenstange 12 abdichtet. Unterhalb dieses Dichtungsstegs 17 ist eine Aussteifungshülse 18 in der Dichtung 14 angeordnet, die den Dichtungssteg 17 abstützt und die Dichtung 14 insgesamt gegen die Kolbenstange 12 abstützt. Auf der der Führungsbüchse 10 abgewandten Seite der Dichtung 14 stützt sich gegen diese eine weitere Dichtung 19 ab, die in ihrer Formgebung identisch zu der Dichtung 14 ausgebildet ist, die aber spiegelsymmetrisch zur Dichtung 14 angeordnet ist, die also gegen ein Austreten von Gas aus dem Gehäuse 1 nach außen abdichtet. Sie weist demzufolge eine an der Innenwand 7 anliegende in das Gehäuse hinein gerichtete Dichtlippe 20, eine Stützschulter 21, einen an der Kolbenstange 12 anliegenden Dichtsteg 22 und eine Aussteifungshülse 23 auf. Die Stützschulter 21 stützt sich gegen einen Haltering 24 ab, der axial zum Inneren des Gehäuses hin dadurch gehalten ist, daß er mittels einer in das Gehäuse 1 gedrückten Sicke 25 axial festgelegt ist.

Durch die geschilderten Maßnahmen ist das Gehäuse 1 an seinen beiden Enden gas- und flüssigkeitsdicht verschlossen. Im Gehäuse 1 ist ein in Richtung der Achse 2 verschiebbarer Trennkolben 26 angeordnet, der mittels einer O-ringförmigen Dichtung 27 dicht an der Innenwand 7 des Gehäuses anliegt. Zwischen dem Trennkolben 26 und dem Verschlußstopfen 3 ist ein mit Druckgas gefüllter Gasraum 28 gebildet, der gegenüber dem als Flüssigkeitsraum 29 dienenden Gehäuseraum zwischen dem Trennkolen 26 und der Dichtung 19 gas- und flüssigkeitsdicht abgedichtet ist. An dem Trennkolben 26 sind im Flüssigkeitsraum 29 Abstandshalter 30 angebracht.

An dem im Flüssigkeitsraum 29 liegenden inneren Ende der Kolbenstange 12 ist ein Kolben 31 mit integriertem Ventil 32 angebracht. Die Betätigung des Ventils 32 von außen erfolgt mittels eines in Form einer dünnen Stange ausgebildeten Auslösestiftes 33, der in einer konzentrisch zur Achse 2 verlaufenden Bohrung 34 in der Kolbenstange 12 angeordnet ist. Am äußeren Ende der Kolbenstange 12 ist eine Dichtung 35 angeordnet, die den Eintritt von Schmutz in die Bohrung 34 und damit in den Bereich des Ventils 32 verhindert und die gleichzeitig als eine Art Reibungsbremse dient, mittels derer ein unbeabsichtigtes Herausfallen des Auslösestiftes 33 aus der Bohrung 34 verhindert wird. Sie dient primär als eine Art Grob-Dichtung. An diesem äußeren Ende ist die Kolbenstange 12 weiterhin mit einem Außengewinde 36 versehen, an dem eine nicht dargestellte Befestigungseinrichtung angebracht werden kann.

Der Kolben 31 ist auf seiner Außenseite mit einer Nut 37 versehen, in der eine O-ringförmige Dichtung 38 angeordnet ist, die dichtend gegen die Innenwand 7 des Gehäuses 1 anliegt. Sie teilt den Flüssigkeitsraum 29 in zwei Teil-Flüssigkeitsräume 29a und 29b, von denen der Teil-Flüssigkeitsraum 29a sich zwischen der Dichtung 38 und dem Trennkolben 26 und der Teil-Flüssigkeitsraum 29b sich zwischen der Dichtung 38 und der Dichtung 19 erstreckt.

Der Kolben 31 ist hülsenförmig ausgebildet. Er weist eine zur Achse 2 zylindrische Aufnahme 39 für die Kolbenstange 12 auf. In dieser Aufnahme 39 ist die Kolbenstange 12 radial spielfrei gehalten. Die Aufnahme 39 weist eine kanalartige Öffnung 40 auf, die in den Teil-Flüssigkeitsraum 29a mündet und als zur Achse 2 konzentrische Bohrung ausgebildet ist. Zwischen der Aufnahme 39 und der Öffnung 40 ist ein Ringboden 41 der Aufnahme 39 ausgebildet.

Die Kolbenstange 12 ist an ihrem im Kolben 31 befindlichen Ende mit einer zur Achse 2 koaxialen zylindrischen Bohrung 42 versehen; die in diesem Bereich verbliebene Wand bildet ein Ventilgehäuse 43 mit einem radial zur Achse 2 verlaufenden ringförmigen Boden 44. In dieses Ventilgehäuse 43 ist ein Ring 45 eingesetzt, der gegen den Boden 44 anliegt. Auf der dem Boden 44 abgewandten Seite liegt gegen den Ring 45 eine O-ringförmige Dichtung 46 an, die einerseits gegen das Ventilgehäuse 43 und andererseits gegen einen zylindrischen Führungsabschnitt 47 eines Ventilkörpers 48 dichtend anliegt. Gegen die Dichtung 46 liegt eine weitere O-ringförmige Dichtung 49 an, die ebenfalls einerseits gegen das Ventilgehäuse 43 und andererseits gegen den zylindrischen Führungsabschnitt 47 des Ventilkörpers 48 dichtend anliegt. Während die Dichtung 46 primär gegen das Eindringen von Flüssigkeiten und gegebenenfalls Gasen in mikrofeinen Mengen von außen nach innen abdichtet, dichtet die Dichtung 49 gegen das Austreten von Flüssigkeiten und/oder Gasen nach außen ab.

Gegen die Dichtung 49 liegt wiederum eine Halte- und Führungsbüchse 50 an, die mit einem nach außen vorstehenden Ringbund 51 das Ventilgehäuse 43 übergreift, also axial gegen die Kolbenstange 12 festgelegt ist.

Zwischen dem Ringbund 51 und dem Ringboden 41 ist eine Dichtung 52 angeordnet. Diese weist einen inneren zur Stabilisierung dienenden Ring 53 aus einem festen Werkstoff, wie einem Metall oder einem ausreichend harten Kunststoff auf. Die Dichtung 52 liegt einerseits gegen die Aufnahme 39, andererseits gegen den Ringboden 41 und gegen den diesem gegenüberliegenden Ringbund 51 dichtend an. Die Dichtung liegt gegen eine sich kegelstumpfförmig erweiternde Dichtungsfläche 54 eines in der Öffnung 40 befindlichen Ventiltellers 55 des Ventilkörpers 48 an.

An die kegelstumpfförmige Dichtungsfläche 54 des Ventiltellers 55 schließt sich ein gegenüber dem Führungsabschnitt 47 verjüngter Abschnitt 56 an, dessen Außendurchmesser deutlich kleiner ist als der Innendurchmesser der Halte- und Führungsbüchse 50, so daß zwischen diesen ein Überströmraum 57 gebildet wird.

In der Aufnahme 39 ist im Bereich des Übergangs zwischen dem Ventilgehäuse 43, also der Kolbenstange 12, und dem Ringbund 51, ein Ringkanal 58 ausgebildet, der also nach innen jeweils teilweise durch das Ventilgehäuse 43 und den Ringbund 51 abgedeckt wird. Dieser Ringkanal 58 ist durch eine Überströmöffnung 59 mit dem Teil-Flüssigkeitsraum 29b verbunden.

Radial gegenüber der Überströmöffnung 59 ist in der Halte- und Führungsbüchse 50 ein sich parallel zur Achse 2 erstreckender schlitzartiger Durchbruch 60 ausgebildet. Diesem zugeordnet ist an der Stirnseite 61 des Ventilgehäuses 43 eine Drosselöffnung 62 ausgebildet, die also zum Ringkanal 58 hin offen ist. Aus dem Teil-Flüssigkeitsraum 29b kann also Flüssigkeit durch die durch eine Bohrung gebildete kanalartige Überströmöffnung 59 in den Ringkanal 58 und dann auf der diametral gegenüberliegenden Seite durch die Drosselöffnung 62 und den Durchbruch 60 in den Überströmraum 57 fließen. Die Strömung kann naturgemäß auch in umgekehrter Richtung erfolgen.

Wenn durch Hineindrücken des Auslösestiftes 23 in die Kolbenstange 12 hinein der Ventilkörper 48 in Richtung zum Teil-Flüssigkeitsraum 29a verschoben wird, dann kommt der verjüngte Abschnitt 56 vor die Dichtung 52, die aufgrund des geringen Durchmessers des Abschnittes 56 nicht an diesem anliegt. Die Dichtung zwischen dem Ventilkörper 48 und dem Ventilgehäuse 43 ist also aufgehoben. In diesem Fall kann dann die Flüssigkeit aus dem Überströmraum 57 innen an der Dichtung 52 vorbei in die Öffnung 40 und von dort in den Teil-Flüssigkeitsraum 29a bzw. in umgekehrter Richtung fließen.

Der Ventilteller 55 bleibt bei diesen Verstellbewegungen in der kanalartigen Öffnung 40, die wie ein Schutzrohr 63 über die Stirnseite 64 des Kolbens 31 vorsteht. Wenn in einem Grenzfall, bei völlig eingefahrener Kolbenstange 12, der Kolben 31 an den Trennkolben 26 stößt, dann kommen die Abstandshalter 30 zur Anlage an die Stirnseite 64, so daß auch dann Flüssigkeit ungehindert in die Öffnung 40 bzw. aus der Öffnung 40 strömen kann.

Der Kolben 31 ist an seinem seiner Stirnseite 64 abgewandten Ende auf der Kolbenstange 12 in dem Bereich hinter dem Ventilgehäuse 43 festgelegt. Hier weist die Kolbenstange 12 eine Ringnut 65 mit Teilkreisquerschnitt auf, in die ein Sicherungsring 66 mit Kreisquerschnitt eingelegt ist. Der Kolben 31 ist auf seiner dem Ringboden 41 entgegengesetzten offenen Seite in unverformtem Zustand mit einer koaxial zur Achse 2 verlaufenden Bohrung 67 versehen. Nach dem Zusammenfügen des Ventils 32 und des Kolbens 31 in der vorstehend geschilderten Weise wird der Kolben 31 im Bereich dieser Bohrung 67 zur Kolbenstange 12 hin verformt. Er liegt dann axial gegen den Sicherungsring 66 und auch in seinem äußeren Endbereich mit einem verjüngten Abschnitt 68 gegen die Kolbenstange 12 an. Bei dieser Verformung wird der Kolben 31 axial gegen das Ventil 32 verspannt, wobei die Dichtung 52 axial zwischen dem Ringboden 41 und dem Ringbund 51 zusammengedrückt wird.

Das Ausführungsbeispiel nach Fig. 3 unterscheidet sich von dem nach Fig. 1 in zwei Bereichen. Soweit ansonsten identische Teile verwendet werden, werden identische Bezugszeichen ohne neue Beschreibung verwendet. Soweit nur konstruktiv geringfügig anders ausgebildete Teile verwendet werden, die die gleiche Funktion haben, wird dieselbe Bezugsziffer mit einem hochgesetzten Strich verwendet. Die Abdichtungen nach außen sind im Bereich des kolbenstangenaustrittsseitigen Endes und im Ventil 32 unterschiedlich ausgestaltet. Die Führungsbüchse 10′ ist geteilt ausgebildet, so daß eine zur Kolbenstange 12 hin offene Ringnut 69 vorgesehen werden kann, in die eine O-ringförmige Dichtung 70 eingelegt werden kann, die zwischen der Führungsbüchse 10' und der Kolbenstange 12 nach außen dichtet, also ein Eindringen von Medien von außen in das Gehäuse 1 hinein verhindert. Die gegen einen Austritt von Medien aus dem Gehäuse nach außen dichtende Dichtung 19 liegt direkt gegen die Führungsbüchse 10′ an. In diesem Bereich ist keine gesonderte Dichtung gegen ein Eindringen von Medien im Bereich zwischen der Führungsbüchse 10′ und der Innenwand 7 des Gehäuses 1 vorgesehen. Zum einen ist durch das Umbördeln des Gehäuses 1 um die Führungsbüchse 10′ ohnehin eine sehr dichte Anlage der Innenwand 7 gegen die Führungsbüchse 10′ erreicht; zum anderen ist diese Ausführungsform insbesondere dort vorzusehen, wo der Eintritt von Medien von außen in das Gehäuse 1 nicht zu extrem ist.

Anstelle des Rings 45 und der gegen einen Eintritt von Medien durch die Kolbenstange 12 abdichtenden Dichtung 46 des Ausführungsbeispiels nach Fig. 2 ist im Ausführungsbeispiel nach Fig. 3 eine Dichtungshülse 71 vorgesehen, die die Funktion des Abdichtens gegen ein Eindringen von Medien von außen erfüllt und die gleichzeitig zur Anlage für die Dichtung 49 dient.

Die gegen ein Eindringen von Medien von außen in das Gehäuse dienenden Dichtungen 14,70 und 46,71 sind aus einem Material, das gegenüber den von außen eindringenden Medien resistent ist. Hierbei handelt es sich einerseits um viele Arten von Gummi, oder aber auch um PTFE-Compound (Polytetrafluorethylen-Compound). Da diese Dichtungen nicht gegen die hohen im Inneren des Gehäuses herrschenden Drücke von 80 bar oder mehr abdichten müssen, müssen sie in der Regel nicht sehr stark verspannt sein, so daß der Verschleiß in dem Bereich, wo durch Relativbewegungen der Kolbenstange 12 gegenüber den Dichtungen 14,70 oder des Führungsabschnitts 47 gegenüber den Dichtungen 46 bzw. 71 Reibung auftritt, gering ist.

Die anderen, gegen einen Austritt der unter hohem Druck stehenden Medien aus dem Gehäuse nach außen dienenden Dichtungen 19,49 können dagegen aus einem hochverschleißfesten Dichtungsmaterial, wie z.B. Polyurethan, hergestellt werden, das wiederum unter dem Einfluß von Wasser einem Auflösungsprozeß unterliegt. Dieses möglicherweise von außen eindringende Wasser wird dagegen auf die geschilderte Weise abgehalten.

## Patentansprüche

1. Längeneinstellbare Verstelleinrichtung, mit einem an einem Ende verschlossenen, mit einem Druckmedium gefüllten zylindrischen Gehäuse (1), mit einer abgedichtet aus dem anderen Ende des Gehäuses (1) herausgeführten, in letzterem verschiebbaren Kolbenstange (12), mit einem im Gehäuse (1) angeordneten, gegenüber dessen Innenwand (7) abgedichtet geführten, fest mit der Kolbenstange (12) verbundenen, mit dieser verschiebbaren und den Innenraum des Gehäuses (1) in zwei Teil-Räume (29a,29b) aufteilenden Kolben (31) und mit einem Ventil (32) zum Verbinden oder Trennen der beiden Teil-Räume (29a,29b), das einen mittels eines verschiebbar und abgedichtet geführten Auslösestiftes (33) betätigbaren Ventilkörper (48) aufweist, wobei am anderen Ende des Gehäuses (1) eine mindestens gegen die Kolbenstange (12) anliegende, einen Austritt von Druckmedium entlang der Kolbenstange (12) aus dem Gehäuse (1) verhindernde Dichtung (19) vorgesehen ist und wobei im Ventil (32) eine gegen den Auslösestift (33) anliegende, einen Austritt von Druckmedium aus dem Ventil (32) nach außen verhindernde Dichtung (49) vorgesehen ist, dadurch gekennzeichnet, daß zwischen dem anderen Ende und mindestens der gegen die Kolbenstange (12) anliegenden Dichtung (19) eine weitere, ein Eindringen von Gas und insbesondere Flüssigkeit von außen in das Gehäuse (1) entlang der Kolbenstange (12) verhindernde Dichtung (14,70) vorgesehen ist.

2. Verstelleinrichtung nach Anspruch 1, dadurch gekennzeichnet, daß zwischen dem anderen Ende und einer einen Austritt von Druckmedium aus dem Gehäuse (1) entlang seiner Innenwand (7) verhindernden Dichtung (19) eine ein Eindringen von Gas und insbesondere Flüssigkeit in das Gehäuse (1) verhindernde Dichtung (14) vorgesehen ist.

3. Verstelleinrichtung nach Anspruch 1 oder 2, dadurch gekennzeichnet, daß der im Ventil (32) angeordneten, ein Austreten von Druckmedium verhindernden Dichtung (49) eine ein Eindringen von Gas und insbesondere von Flüssigkeit in das Ventil (32) verhindernde Dichtung (46,71) in Richtung auf den Auslösestift (33) vorgeordnet ist.

4. Verstelleinrichtung nach einem der Ansprüche 1 bis 3, dadurch gekennzeichnet, daß die einen Austritt von Druckmedium verhindernden Dichtungen (19,49) und die ein Eindringen von Gas und insbesondere Flüssigkeit von außen verhindernden Dichtungen (14,46,70,71) unmittelbar benachbart zueinander angeordnet sind.

5. Verstelleinrichtung nach einem der Ansprüche 1 bis 4, dadurch gekennzeichnet, daß die ein Austreten von Druckmedium verhindernden Dichtungen (19,49) aus einem hochverschleißfestem Dichtungsmaterial, insbesondere Polyurethan, bestehen.

6. Verstelleinrichtung nach einem der Ansprüche 1 bis 5, dadurch gekennzeichnet, daß die ein Eindringen von Gas und insbesondere Flüssigkeit von außen verhindernden Dichtungen (14,46,70,71) aus einem gegen aggressive Medien resistenten Material, wie Gummi oder PTFE-Compound, bestehen.

7. Verstelleinrichtung nach einem der Ansprüche 1 bis 6, dadurch gekennzeichnet, daß die jeweilige ein Eindringen von Gas und insbesondere Flüssigkeit von außen verhindernde Dichtunge (14,46,70,71) mit geringer Vorspannung an dem relativ zu ihr bewegbaren Teil (Kolbenstange 12, Ventilkörper 48) anliegt.

8. Verstelleinrichtung nach einem der Ansprüche 1 bis 7, dadurch gekennzeichnet, daß die jeweilige einen Austritt von Druckmedium nach außen verhindernde Dichtung (19,49) mit verhältnismäßig großer Vorspannung an dem relativ zu ihr bewegbaren Teil (Kolbenstange 12, Ventilkörper 48) anliegt.

## Claims

1. Longitudinally controllable adjustment device with a cylindrical housing (1) closed at one end and filled with a pressure medium, with a piston rod (12) sealingly extending from the other end of the housing (1) and slidable therein, with a piston (31) disposed in the housing (1) and sealingly guided against the inner wall (7) thereof, the piston (31) being fixedly connected with the piston rod (12) and slidable together with the piston rod (12) and dividing the inner chamber of the housing (1) into two partial chambers (29a, 29b), and with a valve (32) for connecting or separating the two partial chambers (29a, 29b) comprising a valve body (48) actuatable by means of a slidably and sealingly guided trigger pin (33), a seal (19) being provided at the other end of the housing (1), which seal abuts at least on the piston rod (12) and prevents any flow of pressure media along the piston rod (12) out of the housing (1), and a seal (49) being provided in the valve (32), which seal abuts on the trigger pin (33) and prevents any flow of pressure medium out of the valve (32) to the outside, characterized in that a further seal (14, 70) is provided between the other end and at least the seal (19) abutting on the piston rod (12), which seal (14, 70) prevents any inflow of gas and in particular of liquid along the piston rod (12) from the outside into the housing (1).

2. Adjustment device in accordance with claim 1, characterized in that a seal (14) is provided between the other end and a seal (19) preventing any flow of pressure medium out of the housing (1) along its winner wall (7), which seal (14) prevents any inflow of gas and in particular of liquid into the housing (1).

3. Adjustment device in accordance with claim 1 or 2, characterized in that a seal (46, 71) preventing any inflow of gas and in particular of liquid into the valve (32) is arranged ahead of the seal (49) provided in the valve (32) and preventing any exit of pressure medium, in the direction towards the trigger pin (33).

4. Adjustment device in accordance with one of claims 1 to 3, characterized in that the seals (19, 49) preventing any exit of pressure medium and the seals (14, 46, 70, 71) preventing any inflow of gas and in particular of liquid from the outside are arranged directly adjacent to each other.

5. Adjustment device in accordance with one of claims 1 to 4, characterized in that the seals (19, 49) preventing any exit of pressure medium consist of a sealing material highly resistant to wear, in particular of polyurethane.

6. Adjustment device in accordance with one of claims 1 to 5, characterized in that the seals (14, 46, 70, 71) preventing any inflow of gas and in particular of liquid from the outside consist of a material resistant to aggressive media, such as rubber or a PTFE compound.

7. Adjustment device in accordance with one of claims 1 to 6, characterized in that the respective seal (14, 46, 70, 71) preventing any inflow of gas and in particular of liquid from the outside abuts with little pretension on the part (piston rod 12, valve body 48) movable in relation to it.

8. Adjustment device in accordance with one of claims 1 to 7, characterized in that the respective seal (19, 49) preventing any flow of pressure medium to the outside abuts with comparatively great pretension on the part (piston rod 12, valve body 48) movable in relation to it.

## Revendications

1. Dispositif de déplacement de longueur réglable, comportant un carter cylindrique (1) fermé à une extrémité et rempli d'un fluide de pression, une tige de piston (12) sortant de manière étanche de l'autre extrémité du carter (1) dans lequel elle peut coulisser, un piston (31) disposé dans le carter (1), guidé de manière étanche par rapport à la paroi inétrieure (7) de celui-ci, relié de manière fixe à la tige de piston (12), pouvant coulisser avec celle-ci et séparant l'espace intérieur du carter (1) en deux chambres partielles (29a, 29b), ainsi qu'une soupape (32) pour mettre en communication ou isoler les deux chambres partielles (29a, 29b) et présentant un corps d'obturation de soupape (48) pouvant être actionné au moyen d'une goupille de déclenchement (33) guidée de manière coulissante et étanche, un joint d'étanchéité (19) qui s'applique au moins contre la tige de piston (12) en empêchant la sortie de fluide de pression hors du carter (1) le long de la tige de piston (12), étant prévu à l'autre extrémité du carter (1), et un joint d'étanchéité (49) qui s'applique contre la goupille de déclenchement (33) en empêchant une sortie de fluide de pression hors de la soupape (32) vers l'extérieur, étant prévu dans la soupape (32), caractérisé en ce qu'entre l'autre extrémité et au moins le joint d'étanchéité (19) appliqué contre la tige de piston (12), est prévu un autre joint d'étanchéité (14, 70) empêchant la pénétration de gaz et notamment de liquide de l'extérieur dans le carter (1), le long de la tige de piston (12).

2. Dispositif de déplacement selon la revendication 1, caractérisé en ce qu'entre l'autre extrémité et un joint d'étanchéité (19) empêchant la sortie de fluide de pression hors du carter (1), le long de sa paroi intérieure (7), est prévu un joint d'étanchéité (14) empêchant la pénétration de gaz et notamment de liquide dans le carter (1).

3. Dispositif de déplacement selon la revendication 1 ou 2, caractérisé en ce que devant le joint d'étanchéité (49) disposé dans la soupape (32) et empêchant une sortie de fluide de pression, est disposé, en direction de la goupille de déclenchement (33), un joint d'étanchéité (46, 71) empêchant la pénétration de gaz et notamment de liquide, à l'intérieur de la soupape (32).

4. Dispositif de déplacement selon l'une des revendications 1 à 3, caractérisé en ce que les joints d'étanchéité (19, 49) empêchant une sortie de fluide de pression, et les joints d'étanchéité (14, 46 70, 71) empêchant une pénétration de gaz et notamment de liquide de l'extérieur, sont disposés directement côte à côte.

5. Dispositif de déplacement selon l'une des revendications 1 à 4, caractérisé en ce que les joints d'étanchéité (19, 49) empêchant une sortie de fluide de pression, sont réalisés en un matériau d'étanchéité à résistance très élevée à l'usure, notamment du polyuréthanne.

6. Dispositif de déplacement selon l'une des revendications 1 à 5, caractérisé en ce que les joints d'étanchéité (14, 46, 70, 71) empêchant une pénétration de gaz et notamment de liquide de l'extérieur, sont réalisés en un matériau résistant aux agents agressifs, tel que du caoutchouc ou un composé de PTFE.

7. Dispositif de déplacement selon l'une des revendications 1 à 6, caractérisé en ce que chacun des joints d'étanchéité (14, 46, 70, 71) empêchant une pénétration de gaz et notamment de liquide de l'extérieur, s'appuie avec une faible pécontrainte sur la partie (tige de piston 12, corps d'obturation de soupape 48) mobile par rapport à lui.

8. Dispositif de déplacement selon l'une des revendications 1 à 7, caractérisé en ce que chacun des joints d'étanchéité (19, 49) empêchant une sortie de fluide de pression vers l'extérieur, s'appuie avec une précontrainte relativement élevée sur la partie (tige de piston 12, corps d'obturation de soupape 48) mobile par rapport à lui.
